# EUROPÄISCHE PATENTSCHRIFT

(11) **EP 3 999 450 B1**
(45) Veröffentlichungstag und Bekanntmachung des Hinweises auf die Patenterteilung: **30.08.2023**
(21) Anmeldenummer: 20736662.6
(22) Anmeldetag: 02.07.2020
(51) Int. Cl.: B65G 1/137

(54) **FENSTERFÖRDERTECHNIK, KOMMISSIONIERSYSTEM UND MANUELLES KOMMISSIONIERVERFAHREN**
WINDOW CONVEYING TECHNOLOGY, PICKING SYSTEM AND MANUAL PICKING METHOD
TECHNIQUE DE TRANSPORT DE FENÊTRES, SYSTÈME DE PRÉPARATION DE COMMANDES ET PROCÉDÉ MANUEL DE PRÉPARATION DE COMMANDES

(30) Priorität: 17.07.2019 DE 102019119356
(43) Veröffentlichungstag der Anmeldung: 25.05.2022
(73) Patentinhaber: SSI Schäfer Automation GmbH (AT), 8051 Graz (AT)
(72) Erfinder: GROESSL, Christoph, 8010 Graz (AT); HINTZ, Andreas, 8193 Eglisau (CH)
(74) Vertreter: Witte, Weller & Partner Patentanwälte mbB
(86) Internationale Anmeldenummer: PCT/EP2020/068647
(87) Internationale Veröffentlichungsnummer: WO 2021/008885

(56) Entgegenhaltungen:
- WO-A1-2018/168113
- DE-A1-102010 044 614
- FR-A1- 3 065 951
- JP-A- 2004 338 866

## Beschreibung

Die vorliegende Erfindung betrifft eine Fördertechnik, die mit der sogenannten "Fenstertechnik" betrieben wird, wobei die Fenster dynamisch eingestellt werden. Des Weiteren betrifft die Erfindung ein Kommissioniersystem bzw. Kommissionierlager, das die dynamische Fensterfördertechnik umfasst. Schließlich betrifft die Erfindung ein manuelles Kommissionierverfahren, dass die dynamische Fenstertechnik einsetzt, um einen Kommissionierauftrag abzuarbeiten.

Unter einem "(Kommissionier-) Auftrag" versteht man hier eine Kundenbestellung, die sich aus einer oder mehreren Auftragspositionen (Auftragszeilen) mit einer jeweiligen Menge (Entnahmemenge) des zeilenspezifischen Artikeltyps zusammensetzt. Kommissionieren beschreibt das Sammeln der bestellten Artikel aus einem Artikelsortiment.

Unter einem "Fensterförderer" bzw. einer "Fensterfördereinrichtung" wird nachfolgend eine Fördertechnik (Stetigförderer, wie z.B. ein Bandförderer, oder Unstetigförderer, wie z.B. Flurförderzeuge) verstanden, deren Förderfläche (virtuell, visuell und/oder physisch) in eine Vielzahl von Abschnitten aufgeteilt wird. Jedem Abschnitt wird ein (Kommissionier-) Auftrag zugeordnet. In diesen Abschnitten werden auftragsspezifisch Gegenstände (Stückgüter, Gebinde, Artikel, Verpackungseinheiten, Waren, etc. gesammelt. Die Abschnitte werden als "Fenster" bezeichnet.

Allgemein ist ein "Fenster" ein Bereich oder Abschnitt auf der Fördertechnik, der z.B. einen oder zwei Meter lang ist und der sich über die gesamte Breite der Fördertechnik erstreckt.

Umfasst ein Auftrag mehr Gegenstände als der zugeordnete Abschnitt (räumlich) aufnehmen kann, werden diesem Auftrag herkömmlicherweise mehrere Abschnitte zugeordnet. Das Sammeln und Ablegen der Gegenstände in die auftragsspezifischen Abschnitte erfolgt üblicherweise, während sich das Fördermittel entlang eines (vorab festgelegten) Förderwegs bewegt. Die Bewegung kann kontinuierlich oder getaktet erfolgen.

Das dem Fensterförderer zugrundeliegende Konzept wird als "Fenstertechnik" bezeichnet. Eine exemplarische konventionelle Implementierung der Fenstertechnik ist das "Pick-to-Belt"-Kommissionierverfahren.

Timm Gudehus beschreibt in seinem Buch "Logistik" (Springer Verlag, 2004, ISBN 3-540-00606-0) unter dem Begriff "Pick-to-Belt" ein Kommissionierverfahren, bei dem dezentral mit statischer Artikelbereitstellung auf einen Bandförderer kommissioniert wird. Beim dezentralen Kommissionieren haben Bereitstelleinheiten (z.B. Lagerbehälter) einen festen Platz (z.B. seitlich zum Bandförderer). Eine Kommissionierperson bewegt sich zum Zwecke der Kommissionierung in einem (dezentralen) Arbeitsbereich (Bereich seitlich zum Förderband), in welchem sich eine bestimmte Anzahl von Zugriffsplätzen (z.B. Regale mit Lagerbehältern) befindet. Kommissionieraufträge durchlaufen mit oder ohne Sammelbehälter nacheinander auf dem Bandförderer verschiedene Kommissionierzonen (d.h. Arbeitsbereiche der Kommissionierer entlang des Bandförderers). Wenn ohne Sammelbehälter kommissioniert wird, werden die Artikel aus den Lagerbehältern entnommen und direkt auf den Bandförderer in das zugeordnete Fenster gelegt. Der Bandförderer kann zu diesem Zweck in die oben erwähnten Fenster unterteilt sein, die optisch (z.B. durch eine farbliche Bedruckung) und/oder physisch (z.B. Trennleisten auf der Oberseite des Bands) für den Kommissionierer erkennbar voneinander getrennt sind. Es gibt Fensterbänder mit unterschiedlich langen Teilungen. Die Teilungen sind statisch, weil sie nachträglich nicht mehr geändert werden können.

In den oben erwähnten Kommissionierzonen halten die Aufträge (d.h. die zugewiesenen Sammelbehälter und/oder Fenster auf dem Band) an, bis geforderte Artikeltypen und - mengen manuell aus den Lagerbehältern entnommen und abgelegt sind. Danach kann der Auftrag ggf. zu einem nachfolgenden Kommissionierer (automatisiert) transportiert werden, der eine stromabwärts angeordnete Kommissionierzone zur Abarbeitung nächster Auftragszeilen des Auftrags bedient.

Alternativ wird "Pick-to-Belt" häufig auch als Batch-Picking, auch zweistufiges Kommissionieren genannt, betrieben, d.h. möglichst viele Kundenaufträge, die den gleichen Artikeltyp enthalten, werden zusammengefasst, so dass der Kommissionierer diesen Artikeltyp für alle Kundenaufträge gleichzeitig entnimmt (1. Stufe) und dann ggf. auf die zugehörigen Aufträge verteilt. Das reduziert die Laufwege des Kommissionierers, erfordert aber in der Regel eine individualisierende Markierung ("Labeln") der entnommenen Artikel, damit ein nachgeschalteter Sorter die Artikel auf die jeweiligen Kundenaufträge verteilen kann (2. Stufe). Der Kommissionierer kann jeden entnommen Artikel z.B. mit einem Klebeetikett markieren und dann auf ein Band legen, welches keine "Fenster" aufweisen muss. Das Labeln ist arbeitsintensiv und verlangsamt den Kommissionierungsprozess.

Beim einstufigen Kommissionieren (Sammeln eines Auftrags in einem Fenster) ist jedes Fenster mit einer individualisierenden Kennung versehen, so dass dem Kommissionierer mitgeteilt werden kann, in welches Fenster ein bestimmter Artikel abzulegen ist. Diese Zuordnung (Auftrag zu Fenster) kann auch erst vom Kommissionierer vorgenommen werden, wenn der Kommissionierer den ersten Artikel eines Auftrags in ein freies, vorher nicht zugeordnetes Fenster ablegt, siehe z.B. DE 10 2010 044 614 A1.

Das Fördermittel, d.h. das Band, des Bandförderers ist in der Länge nicht variabel. Die Fenster sind nur grob gerastet. Restteilungen führen zu Platzverlusten auf dem Band. Das Band muss speziell angefertigt werden, damit eine Materialflusssteuerung die Bandlage (Positionen der jeweiligen Fenster) erkennen kann. Zu diesem Zweck wird herkömmlicherweise z.B. eine Indexlochung (z.B. am Anfang jedes Fensters) eingesetzt. Häufig muss eine Neureferenzierung durchgeführt werden, damit die Materialflusssteuerung die Positionen der Fenster exakt kennt.

Unterschiedliche auftragsspezifische Platzbedürfnisse, die durch die Menge und Größe der Artikel des Auftrags definiert sind, können mit konventionellen Fensterbändern nur berücksichtigt werden, indem einem Auftrag mehrere (gleich dimensionierte) Fenster (vorzugsweise hintereinander) zugewiesen werden. Eine dynamische Anpassung der Fenstergröße ist nicht möglich, weil die Größe schon bei der Bandherstellung unveränderlich festgelegt wird.

Neben den manuellen Kommissionierverfahren gibt es auch (voll-)automatisierte Kommissionierverfahren. In diesem Fall werden sogenannte Kommissionierautomaten eingesetzt. Ein exemplarischer Kommissionierautomat ist ein sog. "A-Frame", wie er in der US 5,271,703 B beschrieben ist. Ein A-Frame weist ein Grundgestell mit einem A-förmigen Querschnitt auf. Horizontal entlang des Grundgestells sind vertikal ausgerichtete Vorratsschächte angeordnet, an deren unteren Enden vertikal gelagerte Güter automatisiert auf einen tiefer angeordneten Förderer abgegeben werden. Durch die Beine des A-förmigen Querschnitts des Grundgestells verläuft z.B. ein sog. Fensterband. Das Fensterband ist üblicherweise ein endlos umlaufender Bandförderer, dessen Band bzw. dessen durch das Band definierte Förderfläche virtuell (und ggf. auch physisch durch Leisten) in eine Vielzahl von (Sammel-)Fenstern (Abschnitte) aufgeteilt ist. Virtuell bedeutet in diesem Zusammenhang, dass die Fenstergrenzen optisch nicht erkennbar sind, sondern nur datentechnisch im Rechnersystem (Materialflusssteuerung) hinterlegt sind. Das Rechnersystem "sieht" die Fenstergrenzen und sorgt dafür, dass die Artikel in das richtige Fenster abgegeben werden. Da nicht manuell kommissioniert wird, müssen die Fenstergrenzen nicht sichtbar sein.

Das Fensterband wird vorzugsweise kontinuierlich durch die A-förmigen Beine des A-Frames bewegt. Der (Kommissionier-)Auftrag ist, je nach seinem Umfang, einem einzigen oder mehreren Fenstern zugeordnet. Wenn das Fenster bzw. der zugehörige Auftrag einen Vorratsschacht passiert, der auf einer der Seiten des A-Frames montiert ist, können mittels eines am unteren Ende jedes Schachts vorgesehenen Auswerfers ein oder mehrere Artikel gemäß dem gerade den Schacht passierenden (Fenster bzw.) Auftrag ausgeworfen werden.

Allgemein werden die Aufträge den Fenstern von einem Auftragsabwicklungssystem zugewiesen, insbesondere bevor die Fenster z.B. durch den A-Frame laufen. Das Auftragsabwicklungssystem ist üblicherweise in eine Kommissioniersteuerung (z.B. Lagerverwaltungsrechner) integriert, die z.B. auch ein Warenwirtschaftssystem aufweisen kann. Die Kommissioniersteuerung wird üblicherweise durch eine Datenverarbeitungsanlage realisiert.

Die konventionelle Fenstertechnik ist eigentlich nur bei der Kommissionierung von geometrisch kleinen Artikeln, wie z.B. Arzneimitteln und Medikamenten, sinnvoll. Der Einsatz der Fenstertechnik bei der Kommissionierung von Stückgütern mit größeren Dimensionen oder bei hohen Stückzahlen wird üblicherweise nicht praktiziert, weil die Fenstergröße, d.h. die Fensterlänge, zu lang wird, wenn alle Stückgüter, die zu einem Kommissionierauftrag gehören, in Form eines "Haufens" in ein einziges Fenster kommissioniert werden sollen.

Wenn der Kommissionierer manuell in das Fenster, und zwar unabhängig von der Größe des Fensters, kommissioniert, kann es zu weiteren Problemen kommen.

Zum einen kann nicht sicher gewährleistet werden, dass der Kommissionierer ein entnommenes Stückgut tatsächlich in das zuvor dem Auftrag zugeordnete (richtige) Fenster ablegt.

Das Ablegen eines entnommenen Stückguts ist ferner schwierig, wenn sich das Fensterband kontinuierlich bewegt, weil der Kommissionierer das richtige Fenster treffen muss. Das Ablegen wird umso schwieriger, je schneller sich das Fensterband bewegt.

Außerdem ist es schwierig, dem Kommissionierer genau jenes Fenster zu signalisieren, in welches der Kommissionierer das entnommene Stückgut gerade ablegen soll. Zwar ist es bekannt, die Fenster mit fortlaufenden Nummern zu bedrucken und dem Kommissionierer die dem Auftrag zugeordnete Fensternummer entweder auf einem Display anzuzeigen oder akustisch anzugeben. Hier besteht aber immer die Gefahr, dass der Kommissionier diese Zielort-Information, d.h. das Zielfenster, in welches das entnommene Stückgut abzulegen ist, auf seinem (Lauf-)Weg zum Zielfenster vergisst oder das Fenster verwechselt. Besonders bei einer fortlaufenden Nummerierung besteht die Gefahr, dass der Kommissionierer vermeintlich zu wissen meint, wo sich das Zielfenster gerade befindet, und trotzdem bzw. gerade deswegen in ein falsches Fenster ablegt.

Wenn mehrere manuelle Kommissionierplätze hintereinander stromabwärts angeordnet sind und von ein und demselben Fensterförderer durchquert werden, pflanzen sich die aus einer stromaufwärts erfolgten Fehlpositionierung ergebenden Probleme stromabwärts fort und verstärken sich mitunter sogar. Wenn ein erster Kommissionierer in einer ersten Kommissionierzone, die weiter stromaufwärts liegt, ein Stückgut in ein falsches Fenster ablegt, kann es bei einer entsprechenden Fenstergröße vorkommen, dass ein weiter stromabwärts positionierter, zweiter Kommissionierer sein Stückgut nicht in das diesem Stückgut zugewiesene Fenster ablegen kann, weil dort bereits das Stückgut des ersten Kommissionierers liegt. In diesem Fall kann das gerade abzulegende Stückgut entweder gar nicht oder nur in ein anderes, falsches Fenster abgelegt werden. Im letzten Fall potenzieren sich die Fehler also.

Die DE 10 2015 105 942 A1 offenbart ein Verfahren und eine Vorichtung zur Einlagerung von Objekten in ein Regalsystem.

Die DE 102 35 865 A1 offenbart eine Vorrichtung zum Fördern von Waren.

Die nachveröffentlichte DE 10 2018 203 175 A1 offenbart eine Kommissioniervorrichtung mit einem sich virtuell in einem Arbeitsbereich befindlichen Bild. FR3065951A1 offenbart ein Fensterfördertechnik-System gemäß dem Oberbegriff von Anspruch 1.

Es ist daher eine Aufgabe, einen Fensterförderer und ein Betriebsverfahren bereitzustellen, die die oben erwähnten Nachteile überwinden.

Diese Aufgabe wird gelöst durch ein Fensterfördertechnik-System gemäß Anspruch 1.

Die Fenster werden dynamisch bestimmt und angezeigt. Die Fenster sind hinsichtlich ihrer Position, Abstände und Größe flexibel einstellbar. Das Fördermittel muss nicht speziell angefertigt werden, weil die Fenster auf das Fördermittel projiziert werden.

Erfindungsgemäß weist das auftragsspezifische Fenster eine variabel einstellbare, auftragsspezifische räumliche Größe auf und wird insbesondere so angezeigt, dass eine Ablageposition von jedem der Güter des Kommissionierauftrags innerhalb des Fensters exakt angezeigt wird.

Die Größe des Fensters wird auftragsspezifisch eingestellt. Jedem Auftrag kann ein Fenster mit einer anderen Größe zugewiesen werden. Diese Fenster können sequentiell zugeordnet werden. Die Reihenfolge der Aufträge muss nicht geändert werden, damit jedem Auftrag ein Fenster einer geeigneten Größe zugeordnet werden kann. Die Fenstergröße wird dynamisch an die Größe des aktuell zu bearbeitenden Auftrags angepasst.

Die Vorausplanung kann sogar so weit gehen, dass jedem Gut innerhalb des Fenster ein gutspezifischer Ablageort zugewiesen wird, der dem Kommissionierer (durch eine Projektion) angezeigt wird. Auf diese Weise können die Güter in einer vorbestimmten Sequenz innerhalb des Fensters angeordnet werden. Der gutspezifische Ablageort kann mit einer visualisierten Kennung (Umrissfläche, Name, ID, etc.) des Guts angezeigt werden. Durch die ortsgenaue Ablage der Güter kann durch die Steuerung 16 z.B. am Ende eines Kommissionierabschnitts überprüft und verifiziert werden (z.B. mit einer Lichtschranke), ob das Gut tatsächlich abgelegt wurde oder nicht.

Weiter ist es von Vorteil, wenn das System ferner eingerichtet ist, das auftragsspezifische Fenster während einer Bewegung der Förderfläche synchron mit der Förderfläche mitzubewegen.

Unabhängigkeit von der Geschwindigkeit, mit der die Fördertechnik betrieben wird, wird das jeweilige Fenster immer am richtigen Ort angezeigt. Es kommt zu keinem Relativversatz auf der Fördertechnik. Die Fördertechnik kann mit beliebigen Geschwindigkeiten betrieben werden. Die Geschwindigkeit kann konstant oder veränderlich sein. Die Fördertechnik kann kontinuierlich oder getaktet betrieben werden.

Die Fördertechnik kann modular aufgebaut sein, wobei die jeweiligen Module mit unterschiedlichen Geschwindigkeiten betreibbar sind. Dadurch kann eine Komprimierung oder ein Auseinanderziehen jedes bereits zumindest teilweise belegten Fensters bewirkt werden. Durch ein Anhalten vorgängiger Förderer an einer Fenstergrenze kann das zum nachfolgenden Förderer gewechselte Fenster beliebig vergrössert werden. Umgekehrt kann durch Anhalten des folgenden Förderers das Fenster im Übergangsbereich zum vorhergehenden Förderer verkleinert werden.

Insbesondere weist das System ferner eine Messeinrichtung auf, um eine Geschwindigkeit der Bewegung der Förderfläche zu bestimmen, wo sich das auftragsspezifische Fenster befindet.

Die orts- und zeitabhängige Messung der Fördergeschwindigkeit erleichtert die oben erwähnt Synchronisierung mit der Visualisierung der Fenster.

Gemäß einer weiteren bevorzugten Ausführungsform ist das System eingerichtet, nur äußere, insbesondere außenliegende, Randbereiche des auftragsspezifischen Fensters anzuzeigen.

Es kommt zu keiner Überlagerung der visualisierten Fenstergrenze mit gesammelten Gütern. Die Fenstergrenzen sind für den Kommissionierer immer gut erkennbar. Die Fenstergrenzen weisen eine kleinere Fläche als das Fenster insgesamt auf, so dass die Visualisierung einfacher ist.

Vorzugsweise ist das System eingerichtet, mehrere auftragsspezifische Fenster für mehrere Kommissionieraufträge gleichzeitig auf der Förderfläche anzuzeigen.

Dies ermöglicht eine parallele Arbeitsweise. Mehrere Kommissionierer können gleichzeitig mehrere Aufträge abarbeiten, wobei jedem Kommissionierer vorzugsweise immer nur einer der Aufträge fest zugewiesen ist. Batch-Picking ist möglich, weil mehrere Artikel des gleichen Typs entnommen werden können und dann auch mehrere Fenster verteilt werden können.

Insbesondere ist jedem der mehreren Kommissionieraufträge eine individualisierende Farbe zugeordnet, in der das jeweilige auftragsspezifische Fenster angezeigt wird.

Der Farbcode erleichtert ein gleichzeitiges Arbeiten von mehreren Kommissionierern, weil jeder Kommissionierer seine eigene Farbe hat. Fehlkommissionierungen werden vermieden bzw. zumindest reduziert.

Weiter ist es von Vorteil, wenn das auftragsspezifische Fenster von oben auf die Förderfläche projiziert wird oder von unten durch ein zumindest teilweise lichtdurchlässiges Fördermittel projiziert wird, das die Förderfläche definiert.

Der Kommissionierer wird beim Ablegen der Güter in das Fenster nicht gestört. Der Kommissionierer hat ausreichend Platz, um sich frei entlang der Fördertechnik zu bewegen, insbesondere zwischen den Entnahmeorten und den Fenstern (Ablageorte).

Besonders bevorzugt ist es, wenn die Fördereinrichtung modular aufgebaut ist, wobei mehrere Module hintereinander angeordnet sind, um den Förderweg zu bilden.

Ein weiterer Vorteil ist darin zu sehen, dass auftragsspezifische Fenster und/oder Bereiche des Rests der Förderfläche beleuchtet werden, die an das auftragsspezifische Fenster angrenzen.

Die Visualisierung des Fensters kann auf verschiedene Weisen erfolgen. Es kann visualisiert werden, ob eine Artikelablage zulässig ist oder nicht. Das Fenster selbst kann ausgeleuchtet werden oder nur die Grenzen davon.

Insbesondere ist die Fördereinrichtung ein Rollenförderer, ein Kettenförderer, ein Gliederkettenförderer, ein Bandförderer oder ein fahrerloses Transportsystem.

Die Visualisierung der Fenster ist vom Fördermittel unabhängig, da sie projiziert wird. Rollenförderer sind z.B. der konventionellen statischen Fenstertechnik, wo die Grenzen fest aufgedruckt oder montiert sind, nicht zugänglich, weil zwischen den Rollen Spalte vorgesehen sind.

Weiter ist es von Vorteil, wenn mehrere auftragsspezifische Fenster von oben und/oder seitlich zu einer Förderrichtung projiziert werden.

Außerdem wird die Aufgabe durch ein Kommissionierlager gemäß Anspruch 13 gelöst.

Die Aufgabe wird ferner gelöst durch ein manuelles Kommissionierverfahren gemäß Anspruch 14.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in den Zeichnungen dargestellt und werden in der nachfolgenden Beschreibung näher erläutert. Es zeigen:
Fig.1 ein Blockdiagramm eines Kommissionierlagers mit einem Fensterfördertechnik-System; und
Fig. 2 eine Draufsicht auf einen Teil eines exemplarischen Kommissionierlagers.

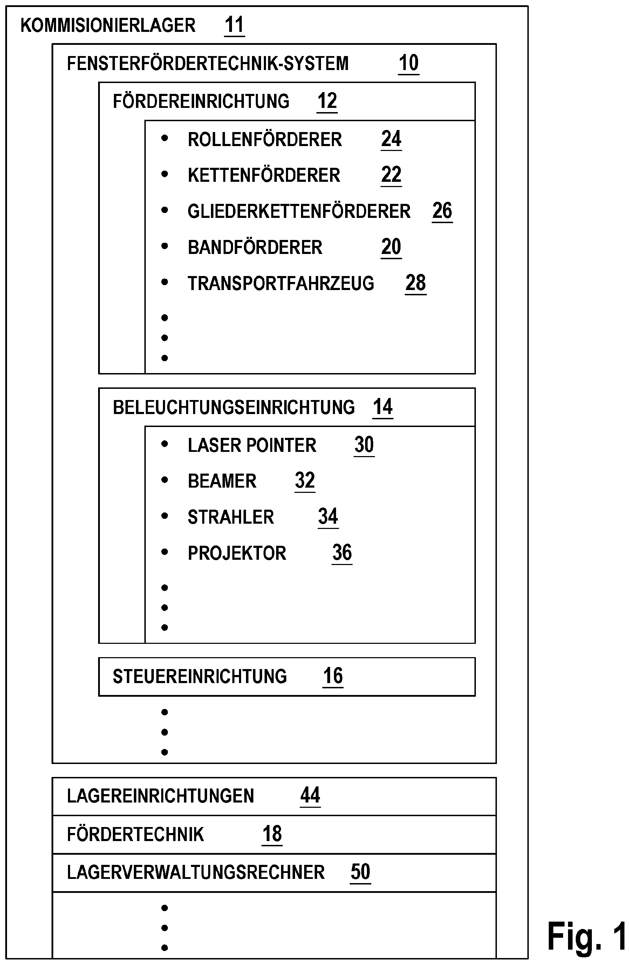

Fig. 1 zeigt ein Blockdiagramm eines Fensterfördertechnik-Systems (nachfolgend kurz auch nur "System" genannt) 10, das in einem Kommissionierlager 11 (z.B. in einem Distributionszentrum eines Filialisten oder in einem Versandzentrum eines Online-Händlers) einsetzbar ist.

Das System 10 weist eine innerbetrieblich nutzbare (Fenster-)Fördereinrichtung 12 auf, die nachfolgend auch als Fensterförderer bezeichnet wird. Ferner weist das System 10 eine Beleuchtungseinrichtung 14 und eine Steuereinrichtung (z.B. eine Datenverarbeitungseinrichtung) 16 auf. Die Steuereinrichtung 16 kann dezentral aufgebaut sein und sowohl Teile einer Kommissioniersteuerung als auch Teile der Steuerung der Fördereinrichtung 12 (z.B. Geschwindigkeit) und der Beleuchtungseinrichtung 14 (synchrones Mitbewegen der Fenster) umfassen.

Die Fördereinrichtung 12 ist Teil einer Fördertechnik 18, die wiederum ein Teil des Kommissionierlagers bzw. -systems 11 ist. Die Fördertechnik 18 kann Stetigförderer, wie z.B. Bandförderer 20, Kettenförderer 22, Rollenförderer 24, Gliederkettenförderer 26, etc., und/oder Unstetigförderer umfassen, wie z.B. mannbediente Flurförderzeuge (Gabelstapler, Plattformwagen, etc.), Krane, automatische LKW-Verladesysteme, fahrerlose Transportfahrzeuge 28 (FTF), Werkstückförderer, sowie Senkrechtförderer, wie z.B. Hebetische oder Gurtheber. Es versteht sich, dass die hier genannten Fördertechniktypen nicht abschließend zu verstehen sind.

Die Beleuchtungseinrichtung 14 kann z.B. ein Laser-Pointer 30, ein Beamer 32, ein Strahler 34, ein Projektor 36 oder dergleichen sein. Die Beleuchtungseinrichtung 14 umfasst eine Lichtquelle. Es versteht sich, dass die hier genannten Beleuchtungseinrichtungstypen nicht abschließend zu verstehen sind.

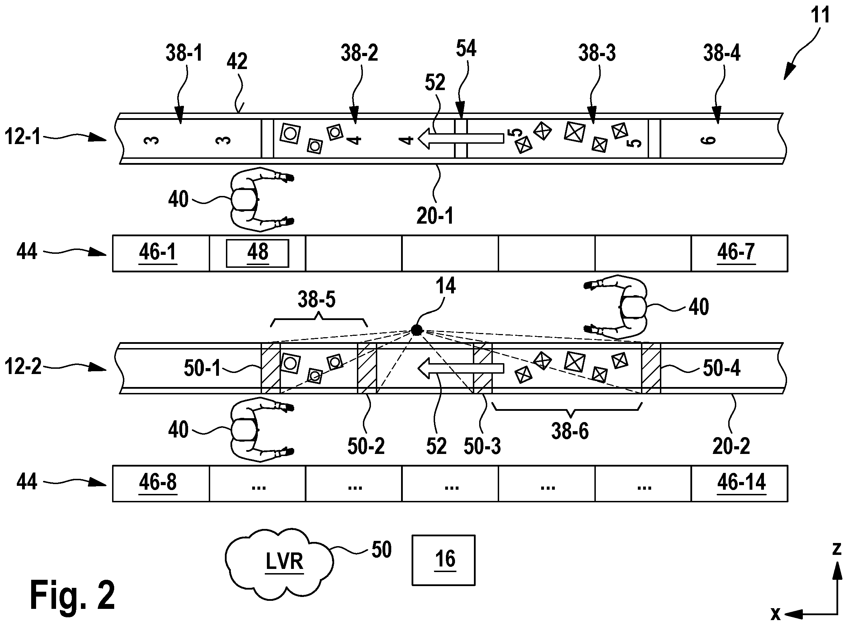

Die Beleuchtungseinrichtung 14 ist generell eingerichtet, das Licht gezielt auf vorab bestimmte Bereiche (Fenster) der Fördereinrichtung 12 zu richten. Dies bedeutet insbesondere, dass die Beleuchtungseinrichtung 14 Licht an gewünschte Orte (z.B. Fenstergrenze) auf der Fördereinrichtung 12 lenken kann, um Fenster 38 in einer visuell für einen Kommissionierer 40 unterscheidbaren Weise auf einer Förderfläche 42 anzuzeigen, vgl. Fig. 2, insbesondere durch eine Projektion von Licht.

Jedes Fenster 38 repräsentiert generell einen Abschnitt der Förderfläche 42 mit einer vorab definierten Länge, und ggf. Breite. Dieser Abschnitt ist einem Kommissionierauftrag zugeordnet. In diesem Abschnitt bzw. Fenster 38 werden solche Güter gesammelt, die zu diesem Kommissionierauftrag gehören, der dem Fenster 38 zugeordnet ist. Es handelt sich also um auftragsspezifische Güter die in den auftragsspezifischen Fenstern 38 gesammelt werden, indem die Kommissionierer 40 diese Güter dort ablegen, nämlich direkt und/oder in einen Sammelbehälter, der im Fenster 38 positioniert ist. Dem Kommissionierer 40 wird gemäß dem Kommissionierauftrag mitgeteilt, welche Güter von welchem (Lager-) Ort zu entnehmen sind und in welches Fenster 38 die entnommenen Güter abzulegen sind, wie es nachfolgend noch näher erläutert werden wird. Diese Mitteilung kann dem Kommissionierer 40 ebenfalls auf das Fördermittel projiziert werden, und zwar in das zugeordnete Fenster. Die Beleuchtungseinrichtung 14 könnte ferner genutzt werden, um auch den Entnahmeort zu visualisieren. Unabhänig davon, welche Einrichtung den Entnahmeort visualisiert, können die Visualisierungen des Entnahmeorts und des zugeordneten Fensters aufeinander abgestimmt sein (z.B. über die Farbe des Lichts, eine Blinkfrequenz, etc.)

Das Kommissionierlager 11 der Fig. 1 umfasst ferner Lagereinrichtungen 44, wie z.B. Lagerregale 46, Lagerbehälter 48, Paletten auf Bodenstellplätzen (nicht gezeigt) und Ähnliches. Ferner umfasst das Lager 11 einen Lagerverwaltungsrechner (LVR) 50, einen Materialflussrechner (MFR) und andere Datenverarbeitungseinrichtungen, die zum Betreiben des Kommissionierlagers 11 erforderlich sind.

Ferner ist ein Auftragsabwicklungssystem (Soft- und/oder Hardware) vorgesehen, das eingerichtet ist, die Größe der Fenster 38 vorab zu bestimmen. Dazu wird der jeweilige Kommissionierauftrag analysiert. Die Dimensionen der zu kommissionierenden Güter können z.B. im LVR 50 hinterlegt sein. Aus der jeweiligen Anzahl der zu kommissionierenden Güter lässt sich so vorab ein Raumbedarf, insbesondere eine Fläche, bestimmen, die benötigt wird, um alle Güter des Auftrags in einem (vorzugsweise) einzigen Fenster 28 zu sammeln.

Geht man davon aus, dass z.B. die gesamte Breite des Fördermittels genutzt wird, kann so auftragsspezifisch eine Länge bestimmt werden, die auf der Fördertechnik 12 benötigt wird, um die Güter zu sammeln. Die Größe des Fensters 38 wird also auftragsspezifisch vorab bestimmt.

Das gleiche gilt für die Position der Fenster 38 und ihre relativen Abstände. Über die Position der Fenster 38 lässt sich eine Reihenfolge der Auftragsabarbeitung beeinflussen.

Die Auftragsabwicklung kann ein Teil der Steuerung 16 sein. Alternativ ist die Steuerung 16 eingerichtet, mit der Auftragsabwicklung zu kommunizieren, um auftragsspezifisch die Länge/Breite, den Abstand und die Relativposition des zugeordneten Fensters auf dem Fördermittel zu bestimmen.

Fig. 2 zeigt eine Draufsicht auf einen Teil eines exemplarischen Lagers 11, das Lagereinrichtungen 44 z.B. in Form von Regalen 46 und Lagerbehältern 48 umfasst. Ferner sind zwei Fördereinrichtungen 12-1 und 12-2 gezeigt, die exemplarisch als Bandförderer 20 ausgebildet sind. Beim Bandförderer 20-1 handelt es sich um einen konventionellen Fensterförderer mit statisch Fenstern 38-1 bis 38-4, die hinsichtlich ihres Orts und ihrer Größe unveränderbar festgelegt sind.

Beim Bandförderer 20-2 der Fig. 2 sind die Fenster 38-5 und 38-6 dynamisch festlegbar und darstellbar hinsichtlich ihres Orts und ihrer Größe. Die dynamischen Fenster 38-5 und 38-6 der Fig. 2 weisen unterschiedliche Längen (X-Richtung), aber z.B. identische Breiten (Z-Richtung) auf. Die Breite der Fenster 38-5 und 38-6 erstreckt sich über eine gesamte Breite des Förderers 20-2. Die Breite kann aber ebenfalls variiert werden.

Die dynamischen Fenster 38-5 und 38-6 grenzen in der Längsrichtung X nicht unmittelbar aneinander, d.h. sie sind beabstandet zueinander angeordnet, und sind jeweils durch (seitliche) Markierungen 50 unterscheidbar visualisiert. Die Markierungen 50 werden mit der Beleuchtungseinrichtung 14 erzeugt, die z.B. oberhalb des Förderers 20-2 (z.B. an einer Gebäudedecke) montiert ist. Die Markierungen 50-1 und 50-2 visualisieren das dynamische Fenster 38-5. Die Markierungen 50-3 und 50-4 visualisieren das dynamische Fenster 38-6. Wenn die dynamischen Fenster 38 (in der Längsrichtung X) unmittelbar aneinander grenzen, reichen weniger (z.B. drei) (Quer-) Markierungen 50 aus, um den jeweiligen Anfang und das jeweiligen Ende der Fensters 38 unterscheidbar zu visualisieren.

In der Fig. 2 visualisieren die Markierungen 50 die Grenzen der Fenster 38 in der Querrichtung Z des Förderers 20-2. es versteht sich, dass auch die Ränder in der Längsrichtung (alternativ oder ergänzend) visualisiert werden könnten. Die Visualisierung des (seitlichen) Rands der Fenster 38 kann innerhalb oder außerhalb der Fenster 38 liegen. In der Fig. 2 liegen die Markierungen 50 exemplarisch außerhalb der Sammelflächen der Fenster 38.

Ferner könnte der Sammelbereich der Fenster 38 vollständig, also vollflächig, (nicht gezeigt) ausgeleuchtet werden.

Die Markierungen 50 werden durch Licht erzeugt, das in der Fig. 2 von der Beleuchtungseinrichtung 14 von oben auf die Förderfläche 42 des Förderers 20-2 projiziert wird. Es versteht sich, dass die Beleuchtungseinrichtung 14 auch unterhalb der Förderfläche angeordnet werden kann, um die Fenster 38 von unten zu visualisieren. In diesem Fall ist das Fördermittel (in Fig. 2 das Band) lichtdurchlässig auszubilden. Um eine Abschattung durch bereits abgelegte Güter zu verhindern, kann die Beleuchtungseinrichtung 14 auch von der Seite erfolgen. Vorzugsweise werden mehrere Beleuchtungseinrichtungen 14 gleichzeitig verwendet, um das gleiche dynamische Fenster 38 zu visualisieren.

Die Markierungen 50 werden von der Beleuchtungseinrichtung 14 so gelenkt, dass sie sich synchron mit dem Förderer 20-2 bewegen. Dies bedeutet, dass es egal ist, ob der Förderer 20-2 kontinuierlich, getaktet oder mit einer sich immer wieder ändernden Geschwindigkeit bewegt wird. Die Steuereinrichtung 16 steht zu diesem Zweck mit dem Materialflussrechner in einer Datenverbindung, der die (Förder-) Geschwindigkeit des Förderers 20-2 regelt und an die Beleuchtungseinrichtung 14 weitergibt. Vorzugsweise weist das Fördermittel der Fördereinrichtung 12 hier Indexierungen auf, die z.B. mit einer Kamera (nicht dargestellt) erkennbar sind, die z.B. in der Nähe der Beleuchtungseinrichtung 14 positioniert ist und ein Sichtfeld aufweist, das im Wesentlichen mit dem Sichtfeld der Beleuchtungseinrichtung 14 überstimmt.

Neben der Position der dynamischen Fenster 38 lässt sich auch die Größe (Länge x Breite) flexibel, und unterschiedlich, einstellen. Das Fenster 38-5 ist z.B. kürzer als das Fenster 38-6. Ferner könnte das Fördermittel nicht nur in der Länge (X-Richtung), sondern auch in der Breite (Z-Richtung) unterteilt werden (nicht dargestellt).

Die Beleuchtungseinrichtung 14 könnte auch direkt in das Fördermittel selbst integriert sein. In diesem Fall weist das Fördermittel eine Vielzahl von Lichtquellen auf, die individuell ansprechbar sind und die vorzugsweise entlang eines regelmäßigen Rasters angeordnet sind, so dass die dynamischen Fenster 38 an einem frei wählbaren Ort mit einer frei wählbaren Länge und/oder Breite visualisierbar sind. Das Fördermittel könnte mit einer Folie beklebt sein, die diese Eigenschaften aufweist. Die in der Förderrichtung statischen Teile der Fördereinrichtung, z. B. Rollen oder das Gestell, können mit Lichtquellen ausgerüstet sein.

Anhand der Fig. 2 werden nachfolgend einige Unterschiede zwischen der herkömmlichen Fenstertechnik (ober Hälfte der Fig. 2) und einer dynamischen Fenstertechnik (untere Hälfte der Fig. 2) näher erläutert werden.

In der Fig. 2 sind beide Konzept gleichzeitigt dargestellt. Die obere (konventionelle) Fördereinrichtung 12-1 mit statischen Fenstern 38-1 bis 38-4 und die untere Fördereinrichtung 12-2 mit den dynamischen Fenstern 38-5 und 38-6 erstrecken sich längs entlang der X-Richtung parallel und quer in der Z-Richtung beabstandet zueinander. Seitlich parallel zu den Fördereinrichtungen 12-1 und 12-2 sind Lagereinrichtungen 44 in Form von zwei Reihen (Regale 46-1 bis 46-7 und 46-8 bis 46-14) angeordnet, die mit Lagerbehältern 48 zur Bevorratung der zu kommissionierenden Güter bestückt sind. Die Kommissionierer 40 können sich entlang der Regale 46 bewegen, um die Güter aus den Regalen 46 zu entnehmen und in die Fenster 38 abzulegen. Die Fenster 38 bewegen sich z.B. mit einer konstanten Geschwindigkeit in einer Förderrichtung 52 (vgl. dunkle Pfeile parallel zur positiven X-Richtung).

Die statischen Fenster 38-1 bis 38-5 der oberen Fördereinrichtung 12-1 der Fig. 2 sind alle gleich lang und z.B. mit einer individualisierenden Nummer bedruckt, damit der Kommissionierer 40 die Güter in ein gewünschtes Fenster aus den Fenstern 38-1 bis 38-5 ablegen kann. Die statischen Fenster 38-1 bis 38-5 sind exemplarisch durch aufgedruckte Trennstreifen 54 visuell voneinander getrennt. Es versteht sich, dass auch eine physische Trennung durch (nicht dargestellte) Leisten möglich ist, die auf der Förderfläche 42 in einem festen Abstand montiert sind. Dadurch dass die Trennungen zwischen den statischen Fenstern 38-1 bis 38-5 permanenter Natur sind, lassen sich die Relativpositionen, Relativabstände und Größen der Fenster 38-1 bis 38-5 nicht mehr (nachträglich) ändern. Deshalb sind die Fenster 38-1 bis 38-5 "statisch".

Die Fenster 38-5 und 38-6 sind hinsichtlich ihrer Positionen, Abstände und/oder Größen "dynamisch", weil diese Parameter jederzeit bedarfsgerecht verändert werden können. Wenn nötig, kann die Fenstergröße auch während eines Kommissioniervorgangs geändert werden. Der Kommissionierer 40 stellt z.B. fest, dass die Größe des Fensters nicht ausreicht, um alle Güter dort zu sammeln, und gibt ein entsprechendes Signal an die Steuereinrichtung 16 und/oder den LVR 50 aus, die dann die Größe entsprechend anpasst, soweit Raum vorhanden ist.

Falls es gewünscht ist, können mittels der Beleuchtungseinrichtung 14 (zusätzlich) sogar exakte Ablagepositionen für die Güter innerhalb eines Fensters genau visualisiert werden. Die exakte Ablageposition stellt einen Teilbereich des Fensters dar, wo das Gut abzulegen ist.

Ferner versteht es sich, dass die dynamischen Fenster 38 auch zeitlich diskret visualisiert werden können, falls es gewünscht ist. Dies bedeutet, dass z.B. nur das Fenster 38 visualisiert wird, welches der Kommissionier 40 auch tatsächlich gerade bearbeitet. Es ist also möglich, die Fenster 38-5 und 38-6 individuell und nur bei Bedarf zu visualisieren. Insbesondere kann eine Drohne genau einem Kommissionierer (temporär oder permanent) zugeordnet sein (evtl. für weitere Funktionen).

Die Beleuchtungseinrichtung 14 könnte auch an einem unbemannten Flugobjekt (z.B. an einer Drohne) montiert sein, um die Visualisierung der dynamischen Fenster 38 noch dynamischer zu gestalten. Das Flugobjekt könnte zu Orten geleitet werden, wo aktuell eine Visualisierung benötigt wird, so dass weniger Beleuchtungseinrichtungen 14 benötigt werden als in dem Fall, wo die Beleuchtungseinrichtungen 14 permanent und örtlich fest installiert sind.

Die Beleuchtungseinrichtung 14 kann eingerichtet sein, jedes der dynamischen Fenster 38 mit einer anderen Farbe zu visualisieren. Dies ist vorteilhaft, wenn mehrere Kommissionierer 40 gleichzeitig an der gleichen Fördereinrichtung 12 arbeiten, weil jedem Kommissionierer 40 eine eigene Farbe zugewiesen werden kann, so dass der Kommissionierer 40 "sein" Fenster 38 schneller und leichter findet.

Es versteht sich, dass das oben beschriebene dynamische Fenstertechnikkonzept unabhängig vom Typ der verwendeten Fördereinrichtung ist. Die konventionelle Fenstertechnik wird nur bei Stetigförderern, insbesondere bei Bandförderern eingesetzt. Die dynamische Fenstertechnik lässt sich aber auch bei Rollenförderern einsetzen, obwohl die Förderfläche 42 nicht durchgehend ausgebildet ist. Zwischen den Rollen befinden sich Spalte, die die Förderfläche 42 unterbrechen.

Außerdem können die dynamischen Fenster 38 auch bei Unstetigförderern eingesetzt werden, wie z.B. bei einem FTF. Das FTF weist ebenfalls eine Förder- bzw. Transportfläche auf, die sich beliebig unterteilen lässt, um Sammelbereiche z.B. auf der Oberseite des FTF zu definieren.

Das Fördermittel der Fördereinrichtung 12 ist vorzugsweise in einem hellen Farbton gehalten, um die Visualisierung der Fenster 38 zu unterstützen und zu verstärken.

### Bezugszeichenliste:

- 10: Fensterfördertechnik-System
- 11: Kommissionierlager
- 12: (Fenster-)Fördereinrichtung/Förderer
- 14: Beleuchtungseinrichtung
- 16: Steuereinrichtung
- 18: Fördertechnik
- 20: Bandförderer
- 22: Kettenförderer
- 24: Rollenförderer
- 26: Gliederkettenförderer
- 28: Transportfahrzeuge
- 30: Laser-Pointer
- 32: Beamer
- 34: Strahler
- 36: Projektor
- 38: Fenster
- 40: Kommissionierer
- 42: Förderfläche
- 44: Lagereinrichtung
- 46: Lagerregal
- 48: Lagerbehälter
- 50: Markierung
- 52: Förderrichtung
- 54: Trennstreifen

## Patentansprüche

1. Fensterfördertechnik-System (10) für eine manuelle Kommissionierung von Gütern durch einen Kommissionierer (40) gemäß einem Kommissionier-Auftrag, wobei der Kommissionierauftrag eine Kundenbestellung ist, die sich aus mehreren Auftragszeilen mit einer jeweiligen Menge eines zeilenspezifischen Artikeltyps zusammensetzt, wobei das System (10) aufweist:
eine Fördereinrichtung (12) zum Transportieren der Güter entlang eines Förderwegs, wobei die Fördereinrichtung (12) vorzugsweise kontinuierlich und diskontinuierlich bewegbar ist und wobei die Fördereinrichtung (12) eine Förderfläche (42) aufweist, auf welcher die Gütern ablegbar sind;
eine Beleuchtungseinrichtung (14), die eingerichtet ist, auftragsspezifisch einen Abschnitt der Förderfläche (42) als auftragsspezifisches Fenster (38) mittels Licht visuell unterscheidbar von einem Rest der Förderfläche (42) anzuzeigen,
**dadurch gekennzeichnet, dass** das auftragsspezifische Fenster (38) eine variabel einstellbare, auftragsspezifische räumliche Größe aufweist, die von einem Auftragsabwicklungssystem vorab bestimmt wird, wobei das Fenster (38) eine vorab definierte Länge aufweist, die auf der Fördertechnik (12) benötigt wird, um die auftragsspezifischen Güter in dem auftragsspezifischen Fenster (38) zu sammeln, die zu dem Kommissionierauftrag gehören, der dem Fenster (38) zugeordnet ist; und
eine Steuereinrichtung (16), die eingerichtet ist, die Förderfläche (42) in das auftragsspezifische Fenster (38) und den Rest einzuteilen, und die ferner eingerichtet ist, Steuersignale für die Beleuchtungseinrichtung (14) zu erzeugen und auszugeben, die die Beleuchtungseinrichtung (14) veranlassen, das auftragsspezifische Fenster (38) visuell unterscheidbar auf der Fördereinrichtung (12) anzuzeigen.

2. System nach Anspruch 1, wobei das auftragsspezifische Fenster (38) so angezeigt wird, dass eine Ablageposition von jedem der Güter des Kommissionierauftrags innerhalb des Fensters (38) exakt angezeigt wird.

3. System nach Anspruch 1 oder 2, das ferner eingerichtet, das auftragsspezifische Fenster (38) während einer Bewegung der Förderfläche (42) synchron mit der Förderfläche (42) mitzubewegen.

4. System nach Anspruch 3, das ferner einen Messeinrichtung aufweist, um eine Geschwindigkeit der Bewegung der Förderfläche (42) zu bestimmen, wo sich das auftragsspezifische Fenster (38) befindet.

5. System nach einem der Ansprüche 1 bis 4, das eingerichtet ist, nur äußere Randbereiche des auftragsspezifischen Fensters (38) anzuzeigen.

6. System nach einem der Ansprüche 1 bis 5, das eingerichtet ist, mehrere auftragsspezifische Fenster (38-5, 38-6) für mehrere Kommissionieraufträge gleichzeitig auf der Förderfläche (42) anzuzeigen.

7. System nach Anspruch 6, wobei jedem der mehreren Kommissionieraufträge eine individualisierende Farbe zugeordnet ist, in der das jeweilige auftragsspezifische Fenster (38-5, 38-6) angezeigt wird.

8. System nach einem der Ansprüche 1 bis 7, wobei das auftragsspezifische Fenster (38) von oben auf die Förderfläche (42) projiziert wird oder von unten durch ein zumindest teilweise lichtdurchlässiges Fördermittel projiziert wird, das die Förderfläche (42) definiert.

9. System nach einem der Ansprüche 1 bis 8, wobei die Fördereinrichtung (12) modular aufgebaut ist und wobei mehrere Module hintereinander angeordnet sind, um den Förderweg zu bilden.

10. System nach einem der Ansprüche 1 bis 9, wobei das auftragsspezifische Fenster (38) und/ oder Bereiche des Rests der Förderfläche (42) beleuchtet werden, die an das auftragsspezifische Fenster (38) angrenzen.

11. System nach einem der Ansprüche 1 bis 10, wobei die Fördereinrichtung (12) ein Rollenförderer (24), ein Kettenförderer (22), ein Gliederkettenförderer (26), ein Bandförderer (20) oder ein fahrerloses Transportfahrzeug (28) ist.

12. System nach einem der Ansprüche 1 bis 11, wobei mehrere auftragsspezifische Fenster (38) von oben und/oder seitlich zu einer Förderrichtung (52) projiziert werden.

13. Kommissionierlager (11) mit einem Fensterfördertechnik-System (10) gemäß einem der vorhergehenden Ansprüche, wobei das Kommissionierlager (11) eingerichtet ist, Kommissionieraufträge manuell abzuarbeiten, indem ein Kommissionierer (40) die Güter auftragsspezifisch aus Lagereinrichtungen (44, 46, 48) entnimmt und manuell an das auftragsspezifische Fenster (38) abgibt, das mittels der Beleuchtungseinrichtung (14) auf der Förderfläche (42) visualisiert ist.

14. Manuelles Kommissionierverfahren mit den Schritten:
auftragsspezifisches Visualisieren eines Abschnitts einer Förderfläche (42) einer automatisierten Fördereinrichtung (12) als auftragsspezifisches Fenster (38) mittels einer Beleuchtungseinrichtung (14) in einer visuell unterscheidbaren Weise, insbesondere synchron zu einer Bewegung der Förderfläche (42), wobei das auftragsspezifische Fenster (38) eine variabel einstellbare, auftragsspezifische räumliche Größe aufweist, die von einem Auftragsabwicklungssystem vorab bestimmt wird, wobei das Fenster (38) eine vorab definierte Länge aufweist, die auf der Fördertechnik (12) benötigt wird, um die auftragsspezifischen Güter in dem auftragsspezifischen Fenster (38) zu sammeln, die zu dem Kommissionierauftrag gehören, der dem Fenster (38) zugeordnet ist; und
Sammeln von auftragsspezifischen Gütern im auftragsspezifischen Fenster (38) durch einen Kommissionierer (40), indem der Kommissionierer (40) die auftragsspezifischen Güter manuell an das durch Licht visualisierte auftragsspezifische Fenster (38) abgibt.

## Claims

1. A window-conveyor system (10) for manually picking of goods by a picker (40) in accordance with a picking order, wherein the picking order is a customer's order constituted by several order lines including a respective quantity of a linespecific type of article, wherein the system (10) comprises:
a conveying device (12) for transporting the goods along a conveying path, wherein the conveying device (12) is movable, preferably continuously and discontinuously, and wherein the conveying device (12) has a conveying area (42) onto which the goods can be deposited;
a lighting device (14) configured to indicate order-specifically portion of the conveying area (42) as an order-specific window (38), by means of light, visually distinguishable from remainder of the conveying area (42),
**characterized in that** the order-specific window (38) has a variable adjustable order-specific spatial size determined in advance by an order-processing system, wherein the window (38) has a pre-defined length required on the conveying device (12) for collecting, within the order-specific window (38), the order-specific goods belonging to the picking order assigned to the window (38); and
a controlling device (16) configured to divide the conveying area (42) into the order-specific window (38) and the remainder, and further configured to generate controlling signals for the lighting device (14), and outputting the same which cause the lighting device (14) to indicate the order-specific window (38) visually distinguishable on the conveying device (12).

2. The system of claim 1, wherein the order-specific window (38) is indicated such that that a deposition position of each of the goods of the picking order is indicated accurately within the window (38).

3. The system of claim 1 or 2 being further configured to move the order-specific window (38), upon movement of the conveying area (42), synchronously with the conveying area (42).

4. The system of claim 3, further comprising a measuring device for determining a velocity of the movement of the conveying area (42) where the order-specific window (38) is located.

5. The system of any of claims 1 to 4, being configured to indicate outer peripheral regions of the order-specific window (38) only.

6. The system of any of claims 1 to 5, being configured to indicate at the same time several order-specific windows (38-5, 38-6) for several picking orders on the conveying area (42).

7. The system of claim 6, wherein an individualizing color, in which the respective order-specific window (38-5, 38-6) is indicated, is assigned to each of the several picking orders.

8. The system of any of claims 1 to 7, wherein the order-specific window (38) is projected from above onto the conveying area (42), or is projected from below through a conveying means, which defines the conveying area (42) and is at least partially transparent.

9. The system of any of claims 1 to 8, wherein the conveying device (12) is structured modularly, and wherein several modules are arranged one behind the other for forming the conveying path.

10. The system of any of claims 1 to 9, wherein the order-specific window (38) and/or regions of the rest of the conveying area (42), which are adjacent to the order-specific window (38), are illuminated.

11. The system of any of claims 1 to 10, wherein the conveying device (12) is one of a roller conveyor (24), chain conveyor (22), link-chain conveyor (26), belt conveyor (20), or a driverless transport vehicle (28).

12. The system of any of claims 1 to 11, wherein several order-specific windows (38) are projected from above, and/or laterally to a conveying direction (52).

13. Picking warehouse (11) including a window-conveyor system (10) in accordance with one of the proceeding claims, wherein the picking warehouse (11) is configured to process picking orders manually, wherein a picker (40) retrieves the goods in an order-specific manner from storage devices (44, 46, 48) and manually delivers the same to the order-specific window (38), which is visualized on the conveying area (42) by means of the lighting device (14).

14. A manual picking method including the steps of:
order-specifically visualizing portion of a conveying area (42) of an automatic conveying device (12) as an order-specific window (38), by means of a lighting device (14), in a visually distinguishable manner, in particular synchronous with movement of the conveying area (42), wherein the order-specific window (38) comprises a variable adjustable order-specific spatial size predetermined by an order-processing system, wherein the window (38) has a pre-defined length required on the conveying device (12) for collecting the order-specific goods within the order-specific window (38), which belong to the picking order being assigned to the window (38); and
collecting order-specific goods within the order-specific window (38) by a picker (40), wherein the picker (40) manually delivers the order-specific goods to the order-specific window (38) visualized by light.

## Revendications

1. Système (10) de convoyage à fenêtre pour une préparation manuelle de marchandises par un préparateur de commandes (40) selon un ordre de préparation de commandes, l'ordre de préparation de commandes étant une commande de client composée de plusieurs lignes de commande avec une quantité respective d'un type d'article spécifique par ligne, le système (10) comprenant :
un dispositif de transport (12) pour acheminer les marchandises le long d'un chemin de transport, le dispositif de transport (12) étant de préférence mis en mouvement de manière continue et discontinue et le dispositif de transport (12) présentant une surface de transport (42) sur laquelle les marchandises peuvent être déposées ;
un dispositif d'éclairage (14) qui est conçu pour indiquer, de manière spécifique à la commande, une section de la surface de transport (42) en tant que fenêtre (38) spécifique à la commande, au moyen de lumière, d'une manière visuellement différenciable d'un reste de la surface de transport (42),
**caractérisé en ce que**
la fenêtre spécifique à la commande (38) a une dimension spatiale spécifique à la commande, réglable de manière variable, qui est déterminée à l'avance par un système de traitement de commandes, la fenêtre (38) ayant une longueur prédéfinie qui est requise sur le convoyeur (12) pour rassembler dans la fenêtre spécifique à la commande (38) les marchandises spécifiques à la commande qui appartiennent à l'ordre de préparation de commandes associé à la fenêtre (38) ; et
un dispositif de commande (16) qui est conçu de façon à subdiviser la surface de transport (42) en la fenêtre spécifique à la commande (38) et en le reste, et qui est conçu en outre de façon à générer et émettre des signaux de commande pour le dispositif d'éclairage (14), qui amènent le dispositif d'éclairage (14) à afficher la fenêtre spécifique à la commande (38) sur le dispositif de transport (12), de manière visuellement différenciable.

2. Système selon la revendication 1, dans lequel la fenêtre spécifique à la commande (38) est affichée de manière à indiquer précisément une position de dépôt de chacune des marchandises de l'ordre de préparation de commandes à l'intérieur de la fenêtre (38).

3. Système selon la revendication 1 ou 2, configuré en outre pour déplacer la fenêtre spécifique à la commande (38) pendant un mouvement de la surface de transport (42) en synchronisation avec la surface de transport (42).

4. Système selon la revendication 3, comprenant en outre un moyen de mesure pour déterminer une vitesse de déplacement de la surface de transport (42) où se trouve la fenêtre spécifique à la commande (38).

5. Système selon l'une des revendications 1 à 4, configuré de façon à n'indiquer que les zones périphériques extérieures de la fenêtre (38) spécifique à la commande.

6. Système selon l'une des revendications 1 à 5, configuré de façon à afficher plusieurs fenêtres spécifiques à une commande (38-5, 38-6) pour plusieurs ordres de préparation de commandes simultanément sur la surface de convoyage (42).

7. Système selon la revendication 6, dans lequel à chacun des multiples ordres de préparation de commandes est attribué une couleur d'individualisation dans laquelle est affichée la fenêtre (38-5, 38-6) spécifique à l'ordre considéré.

8. Système selon l'une des revendications 1 à 7, dans lequel la fenêtre spécifique à la commande (38) est projetée depuis le haut sur la surface de convoyage (42) ou est projetée depuis le bas à travers un moyen de convoyage au moins partiellement translucide définissant la surface de convoyage (42).

9. Système selon l'une des revendications 1 à 8, dans lequel le moyen de convoyage (12) est modulaire et dans lequel plusieurs modules sont disposés les uns derrière les autres pour former le chemin de convoyage.

10. Système selon l'une quelconque des revendications 1 à 9, dans lequel la fenêtre spécifique à la commande (38) et/ou des zones du reste de la surface de convoyage (42) adjacentes à la fenêtre spécifique à la commande (38) sont éclairées.

11. Système selon l'une des revendications 1 à 10, dans lequel le dispositif de transport (12) est un convoyeur à rouleaux (24), un convoyeur à chaîne (22), un convoyeur à chaîne à maillons (26), un convoyeur à bande (20) ou un véhicule de transport sans conducteur (28).

12. Système selon l'une des revendications 1 à 11, dans lequel plusieurs fenêtres (38) spécifiques à la commande sont projetées depuis le haut et/ou latéralement par rapport à une direction de transport (52).

13. Entrepôt (11) de préparation de commandes de marchandises comprenant un système à technique de convoyage à fenêtres (10) selon l'une des revendications précédentes, l'entrepôt (11) de préparation de commandes de marchandises étant agencé pour traiter manuellement des commandes de préparation de commandes, un préparateur de commandes (40) prélevant les marchandises de manière spécifique à la commande dans des installations de stockage (44, 46, 48) et les délivrant manuellement à la fenêtre (38) spécifique à la commande, qui est visualisée sur la surface de convoyage (42) au moyen du dispositif d'éclairage (14).

14. Procédé de préparation manuelle de commandes comprenant les étapes suivantes :
visualisation spécifique à la commande d'une section d'une surface de transport (42) d'un dispositif de transport automatisé (12) en tant que fenêtre spécifique à la commande (38) au moyen d'un dispositif d'éclairage (14) d'une manière apte à être distinguée visuellement, en particulier en synchronisme avec un mouvement de la surface de transport (42), la fenêtre spécifique à la commande (38) ayant une dimension spatiale réglable de manière variable, spécifique à la commande, qui est déterminée à l'avance par un système de traitement des commandes, la fenêtre (38) ayant une longueur définie à l'avance qui est requise sur le système de transport (12) pour rassembler dans la fenêtre spécifique à la commande (38) les marchandises spécifiques à la commande associées à l'ordre de préparation de commandes associé à la fenêtre (38) ; et
collecter les marchandises spécifiques à la commande dans la fenêtre spécifique à la commande (38) par un préparateur de commandes (40), le préparateur de commandes (40) délivrant manuellement les marchandises spécifiques à la commande à la fenêtre spécifique à la commande (38) visualisée par la lumière.
